# EUROPEAN PATENT APPLICATION

(11) **EP 3 769 852 A1**
(43) Date of publication of application: **27.01.2021**
(21) Application number: 19382621.1
(22) Date of filing: 22.07.2019
(51) Int. Cl.: B05B 11/00, H02N 2/18, B05B 12/00, B05B 15/30, A47K 5/12

(54) **PUMP- ACTUATED DISPENSER WITH INTEGRATED SWITCH, SYSTEM AND METHOD FOR REMOTE MONITORING OF PRODUCT CONSUMPTION FROM SAID PUMP- ACTUATED DISPENSER**

(71) Applicant: Open Innovation 2 Go, SL, 28223 Pozuelo de Alarcón (Madrid) (ES)
(72) Inventor: Longarte Cifrián, Ignacio, 28223 Pozuelo de Alarcón - Madrid (ES); de Pablos, David, 28223 Pozuelo de Alarcón - Madrid (ES); Abad de Aranzábal, Guillermo, 28223 Pozuelo de Alarcón - Madrid (ES); Baturone Moreno de Carlos, Pablo, 28223 Pozuelo de Alarcón - Madrid (ES); Gomez Fuente, Oscar, 28223 Pozuelo de Alarcón - Madrid (ES); Alcalá Galán, Francisco, 28223 Pozuelo de Alarcón - Madrid (ES); Rodrigez Dias, José Javier, 28223 Pozuelo de Alarcón - Madrid (ES); Campos de Padua, Alfonso, 28223 Pozuelo de Alarcón - Madrid (ES)
(74) Representative: Hoffmann Eitle

(57) **Abstract**

The invention refers to a pump-actuated dispenser (1) comprising: a compression pump (2), a pump actuator (3), an electronic circuit (9) having stored an unique identification code usable to identify the pump-actuated dispenser (1), a power source (21,24) connected with the electronic circuit (9), and at least one switch (10) to activate the electronic circuit (9), and at least one antenna (18,19,21). The switch (10) is operable by the pump actuator (3), such as when the pump actuator (3) reaches its pressed-down position, the switch (10) is activated and a signal containing the dispenser unique identification code, is transmitted by at least one of the antennas (18,19,21). The invention also refers to a system and a method for remote monitoring of product consumption in pump-actuated dispensers. The invention provides an energy efficient pump-actuated dispenser, that allow high-accurate determination of product level or quantity inside the dispenser.

## Description

### Field and object of the invention

The invention refers in general to pump-actuated dispensers to discharge a dose of product, for example: perfumes, cosmetics, cleaning or medical products.

More specifically, the invention refers to connected or smart pump-actuated dispensers that allow remote monitoring of product consumption. The invention can also be categorized within the technical field of Internet of Things.

An object of the invention is to provide a pump-actuated dispenser that provide high-accurate determination of product level or quantity inside the dispenser, and that it is energy efficient since it requires very low power to operate.

Additionally, the pump-actuated dispenser object of the invention can be manufactured with a reduced number of components, and can be easily integrated in conventional pump dispensers thereby avoiding or minimizing redesigning existing dispensers.

The invention also refers to a system and a method for remote monitoring of product consumption in pump-actuated dispensers.

### Background of the invention

There are a number of consumer products that are dispensed in metered doses by means of pump-actuated dispensers, especially for dispensing fragrances, cosmetics, cleaning liquids, or medicines. The European patent application EP-0544549 A1 describes a conventional pump-actuated dispenser, that typically comprises a compression pump in the form of a cylinder that it is attached to a cap to be mounted on a container containing the product to be dispensed. A pump actuator pushes a piston inside the pump against the elastic action of a spring, in order to dispense the product through a nozzle formed internally in the pump actuator.

In recent years, some consumer containers like water bottles have been introduced in the market, incorporating electronics to automatically monitor consumption of liquid stored in the container. These containers, generally referred as smart or connected containers, rely on sensors to measure liquid level inside the container to determine the remaining quantity of liquid.

Conventional sensors like: ultrasound, optic, pressure, or capacitive sensors, are normally used to measure liquid level inside this type of containers. Whereas conventional sensors are generally reliable for measuring large amount of liquid level in relatively large containers, they are not accurate enough for measuring small amounts of liquids (in the order of micro-liters), for example in the case of perfume containers.

In addition to the inaccuracy of conventional sensors for measuring small amounts of liquids, another drawback of known techniques for monitoring liquid consumption in portable containers, is the excessive consumption of battery power, considering that the sensors have to be energized for their operation, making these containers inconvenient for users because they need to recharge batteries very often.

Therefore, improving measuring accuracy and energy efficiency is critical in the field of connected containers or dispensers.

Another challenge in the development of these connected products due to the space and shape limitations and restrictions, is the integration of the necessary electronic components like sensors, communication modules and batteries, normally mounted on a Printed Circuit Board, or a system in a module inside the dispenser, and without interfering with the daily use of the dispenser and without affecting its exterior design and appearance.

In particular, the integration of radio frequency communication devices in the confined space of a dispenser is also a challenge, because communication electronic components have to be separated a minimum clearing distance to avoid electromagnetic interference and noise in the signal transmission. Therefore, the more components the more space needed.

Furthermore, the consumer products industry is nowadays focused on producing sustainable or green products, thus, for any consumer or disposable product that contains a battery, it is desirable that the battery be as small as possible or that there is no battery at all.

With respect to the communications protocols used by these connected devices, due to the space restrictions identified, the current limited solutions available in these types of containers are normally based on short range radio communications protocols (NFC, Bluetooth, zigbee, or RFID), that require smaller and less powerful antennas and less energy power transmitting signals.

The Bluetooth option is the most widely used, but it complicates usability for the consumer, being a hassle for the following reasons:
- Bluetooth requires a smart phone close to the product or in the range of the product with a relative frequency, if the measure/sensor information must be known on a continued and reliable basis. Short range wireless technologies require the device to be in range of a particular location or other device/local station; NFC requires a particularly close range.
- Bluetooth is not as versatile as cellular technology because it requires a data hub, (and so works always with a companion device such as a smartphone and requires a "pairing" procedure to be run by the end user), that has to be enabled with the correct / updated Bluetooth version.
- experience indicate that when there are many low-range type electronic devices in a household/home, the connectivity tend to experiment regular problems of identification, pairing, and being on-off and need to reset.
- some mobile phones (i.e. Android models), automatically disconnect the Bluetooth communication when the battery is under a given level, to save energy. Every time Bluetooth is turn-on again, the pairings need to set and in most cases this is not automatic.

That is why this short-range devices need also a pairing button required to synchronize again and again with the companion / local station.

Despite the above-mentioned drawbacks of known techniques for monitoring liquid or product consumption in dispensers, still there is an increasing trend in the consumer products industry, to further develop connected devices, that will make available for the consumers new services and consumption habits, some of them related to empowering and tracking the circular economy and a more sustainable re-use of containers.

### Summary of the invention

The invention is defined in the attached independent claims, and satisfactorily solves the drawbacks of the prior art by providing a pump-actuated dispenser that does not rely on conventional sensors, but still is capable of determining accurate product level.

The invention refers to a pump-actuated dispenser for dispensing that integrates a switch using some of the conventional components of the pump-actuated dispenser, and that it is actuated by the user physical actuations, with every product discharge.

Therefore, an aspect of the invention refers to a pump-actuated dispenser for dispensing products in the form of liquid, foam, cream or gel, including a perfume and/or a cosmetic composition, or a medical treatment product. The pump-dispenser comprises a conventional compression pump and a pump actuator to operate the compression pump by pressing down the pump. A nozzle for the product output, is formed in the pump actuator and it is communicated with the compression pump.

The compression pump is a cylinder that houses a piston or plunger, a spring and a valve, so when the piston is pressed by the pump actuator against the action of the spring, a product inside the pump, is expelled through the nozzle while the valve is closed. When the pressure of the pump actuator is released, the piston returns to its initial position due to the elastic action of the spring, suctioning at the same time a new dose of product from a container into the pump.

The pump actuator is axially displaceable with respect to the pump between two end positions, a resting position and a fully pressed-down position, such as when the pump actuator reaches the fully pressed-down position, a metered amount of product (related to the pump chamber volume) from the compression pump, is dispensed through the nozzle.

Conventionally, the dispenser further comprises a cap attached to the compression pump and configured for coupling the compression pump with a container of the product to be dispensed, for example in the form a bottle with a threaded neck such as the cap is threaded with the neck. A dip tube is coupled and communicated with the compression pump, and extends to the bottom of the container, such as the pump suction product from the bottom of the container.

The dispenser further comprises: an electronic circuit, a power source connected or connectable with the electronic circuit to energize the same, a communication port preferably including at least one antenna, and a pump actuator movement detector, preferably a switch device, for example a bi-estable switch or a push-button switch, adapted to activate and desactivate the electronic circuit, for example by activating an enable input of the circuit, or by connecting and disconnecting the power source from the circuit, or by any other conventional means. Preferably, the communication port includes at least one antenna.

Alternatively, the pump actuator movement detector is implement as an electronic or electro-mechanical device that detects the movement of the pump actuator and generates an electrical signal that is connected to de processing device. Examples of such electronic or electro-mechanical device are (but not limited): a hal effector switch, a reed switch, a capacitive device.

The electronic circuit comprises operatively intercommunicated: a processing device, a communication module connected with the antenna or antennas, and a memory having stored a unique identification code identifying the dispenser. The processor, the communication module and the memory can be implemented at any level of integration that the existing technology and the associated costs recommend: as individual circuits, but preferably they are all implemented as one integrated circuit mounted and connected to a Printed Circuit Board (PCB). The communication module might additionally incorporate a processor and a memory to manage communications and other operations. The processing device might be implemented as a microcontroller, microprocessor, a FPGA or similar device.

The electronic circuit is adapted such as when it is activated by the switch device, the dispenser unique identification code is accessible or readable at the communication port. The communication port includes at least one antenna communicated with a communication module of the electronic circuit, wherein the electronic circuit is adapted such as when it is activated by the switch, a signal containing the dispenser unique identification code, is transmitted by at least one of the antennas.

According to the invention, the switch device is operable by the pump actuator, that is, the switch device and the pump actuator are configured in such a way that the displacement of the pump actuator causes the switch device to turn from its "off" (disconnected) position to its "on" (connected) position. Therefore, the switch device is integrated with the dispenser, in that, the switch device is arranged inside the dispenser and some components of the dispenser (e. g. the pump actuator) are used also as a switch component.

The activation of the switch device can be produced when the pump actuator reaches its pressed-down position, thus, the activation of the switch indicates that a dose of product (of known value), has been dispensed.

Additionally, the activation of the switch can be produced also when the pump actuator reaches a predefined intermediate position between its two end positions. This can be implemented by using a multipole switch having each pole terminal placed at different positions, or with two or more switches placed at different positions.

When the pump actuator is released from the pressed-down position or one of said intermediate positions, the pump actuator returns to its resting position and then the switch is des-activated.

The electronic circuit is adapted for counting within a predefined time lapse (a session) the number of full pump activations and/or the number or intermediate activations, such as when the switch is activated (namely closed or opened), an electric signal containing the dispenser unique identification code and optionally including a pump session activation code, is transmitted by the antenna. Preferably, the pump activation session code includes a unique digital counter number of the number and the sequence of activations (pushes) within a predefined time lapse, the date and time of creation of the session code, and battery charge level information. Since several full pump activations and intermediate activations are grouped as a session, and the session information is transmitted in a single signal instead of a signal transmission for each activation (full or intermediate), a significant power saving is achieved.

The electronic circuit has two status modes, a sleep operation mode in which it is inoperative and there is no power consumption or a minimum power consumption, and a run operation mode in which the circuit is powered by the power source, and the circuit runs a program stored in the memory to transmit the code or /and other functions of the circuit. When the switch or one of the switches is activated by the pump actuator, the circuit turns from the sleep mode to the run mode and transmit a signal, and when the circuit finish sending the signal, the circuit returns to the sleep mode in which no power is consumed.

Since the dose dispensed by each type of dispensed product is metered, that is, it is known before hand, by counting the number of full pump activations or intermediate pump activations, the quantity of dispensed product and the quantity of product remaining inside the container, can be directly and precisely determined. The counting of activations can be carried out in the pump-actuated dispenser itself, or in a remote monitoring platform.

Since the pump-actuated dispensers ensure stable, precise and regular dispensed amount of product every time it is actuated, an accurate determination of product level is determined without relying in any sensor and using a minimum amount of power.

Therefore, the dispenser of the invention might be regarded as a synthetic sensor since it does not rely on conventional sensors of any type, thereby saving energy required to power a sensor, and allowing a straightforward determination of product level and accurate monitoring of product quantity, simply by counting the number of pump activations either full activations when the pump actuator is fully depressed, or several intermediate pump activations depending on the degree of displacement of the pump actuator.

The invention uses existing parts of the pump-actuated dispenser, to reduce the number of electronic components, and allowing user hassle free wide range radio transmission, remote calibration and predictive operation.

Due to the integration of switch with the dispenser, the user action is enough to activate the circuit and to trigger the generation and transmission of a signal for every pump full or intermediate activation.

An additional advantage of the invention is that since the power required for operation is extremely low, the size of any power source used like batteries, can be reduced significantly, or even eliminated, for example replaced by solar cells.

The communication module is configured to communicate with a cellular communication network, and/or is configured to communicate via a short-range communication protocol, by means of the antenna or antennae.

The switch comprises at least one fixed contact attached internally to a fixed part of the dispenser for example the cap, and one movable contact internally attached to the pump actuator, such as the movable contact and the pump actuator are jointly movable. The movable contact is displaceable between two end positions of the switch, a non-contact position (corresponding to the resting position of the pump actuator) in which the switch is open and a closed position in which the switch is closed and electrical contact is stablished between the movable contact and the fixed contact of the switch thereby closing the switch, that is, activating the switch.

In a preferred embodiment, the terminals of the switch are connected with inputs of the processor, and the processor is programmed, such as when the switch is closed (or alternately opened) the run mode is triggered and the complete actuation session is computed by a firmware. This operation of the processor is conventional, and since a skilled person in the art is familiar with this type of circuits, it is not necessary to describe its operation with more detail.

Preferably, the switch comprises a substrate for example a PCB, made of an electrically isolating material that is internally attached to the cap. The switch further comprises two fixed contacts supported on a flat surface of the substrate. The movable contact is configured to slide on the fixed contacts, and to connect the two fixed contact in the closed position of the switch.

Additionally, the switch comprises one common fixed contact, two or more position fixed contacts that are vertically arranged in a direction parallel to the displacement direction of the pump actuator, and wherein the movable contact is configured to slide on the common fixed contact and on the position fixed contacts, so as to connect the common fixed contact with one of the fixed contact, depending on the axial position of the pump actuator.

Each position fixed contact is indicative of an axial position of the pump actuator, that is, each position fixed contact correspond to a certain degree of actuation of the pump which in turn correspond to a predetermined amount of dispensed product, and the processor is programmed to generate a code depending on which fixed contact has been activated. This realization is especially useful when the pump is not metered.

Furthermore, the dispenser comprises a housing mounted with the cap, and wherein the electronic circuit is fitted inside the housing. The dispenser further comprises connection lines passing through the housing and connecting each of the position fixed contacts and the common fixed contact of the switch, with the processor of the electronic circuit.

In a preferred embodiment, the power source includes at least one battery placed inside the housing. Alternatively or in addition to batteries, the dispenser includes at least one solar cell or light sensor mounted on an external surface of the housing.

In a preferred embodiment, the housing has a central opening and the cap is fitted inside the opening, such as the housing extends around the cap. Preferably, the cap is press-fitted at the central opening of the housing.

Preferably, the housing has a ring-shaped (toroid) configuration. A ring-shaped configuration is preferred because a large number of available pump-actuated dispensers are cylindrical, thus the housing shape is matched with the dispenser design. For the other dispensers or container configurations, the housing can be shaped accordingly.

Preferably, the electronic circuit includes a printed circuit board, and the antenna is a chip antenna mounted on the circuit printed board, and electrically connected with the communication module of the circuit, for example by means of a frequency adaptation filter.

Preferably, the pump-actuated dispenser has a container coupled with the dispenser, and the container contains the product for example in the form of liquid, foam, cream or gel, including a perfume and/or a cosmetic composition, or a medical product.

Conventionally, the pump-actuated dispenser incorporates a dip tube coupled with the compression pump and dimensioned to extend inside a container when the dispenser is coupled with a container, so that product from the container is suctioned by the pump through the dip tube.

Alternatively to the chip antenna, the antenna is a wire supported by the dip tube and extend lengthwise along the tube. Preferably, the antenna is a rolled around the dip tube, for example in the form of a helix, and optionally the antenna is covered by an electrically isolating material to isolate the antenna from a product inside the container. This helix antenna is a monopole and includes a ground plane in the form of a metallic cylinder mounted externally on the pump body.

Alternatively, the antenna is a conductive strip supported on an external surface of the housing, or embedded within a wall of the housing. For example, the antenna is printed on the printed circuit board as part of the electronic circuit or printed on the housing and connected to the electronic circuit. Preferably, the antenna has a meander configuration, either formed by squared segments, for example with rounded corners, or triangular segments in order to fine tune the characteristics of the antenna..

In another preferred embodiment, the dispenser has two antennas, an antenna supported by the dip tube and an antenna supported by the housing as described above. Preferably, one antenna operates as main communication antenna, and the other antenna operates as a booster antenna to complement signal transmission of the main antenna.

Another aspect of the invention refers to a system for remote monitoring of product consumption. The system comprises at least one pump-actuated dispenser as the one defined above including all the described alternatives, and a remote central monitoring platform communicated through a long-range communication network, with the at least one pump-actuated dispenser. In practice, the system includes thousands of dispensers corresponding to the users subscribed to the monitoring service.

The central monitoring platform is adapted to receive and process signals containing the dispenser unique identification code and a pump activation session transmitted by every pump-actuated dispenser. The central monitoring platform is adapted to calculate for each specific dispenser remaining product quantity, such as product consumption is directly calculated by counting the number of full or intermediate partial activations in each activation/actuation session of the compression pump as explained above.

The central monitoring platform is additionally adapted to perform: a predictive measure operation process, and a calibration and self-correction process.

Another aspect of the invention, refers to a method for remote monitoring of product consumption using the pump-actuated dispenser defined above including all alternatives described and/or the above described system. The method comprises the steps of counting in the pump-actuated dispenser the number of full pump activations and/or intermediate pump activations, wherein each pump activation corresponds to a known amount of dispensed product, and generating a signal containing a pump actuation session containing information about full pump activations and/or intermediate pump activations, and a dispenser unique identification code. The signal is then transmitted to a central monitoring platform, where it is received and processed.

The invention allow that, perfume actuation sessions, hair care actuation sessions, skin care actuation sessions etc., are managed in the platform which constitutes a valuable information for a product distributor and also saves energy at the level of the dispenser.

The method further comprises the steps of receiving and processing in a central monitoring platform the signal transmitted by the pump-actuated dispenser, wherein the step of processing comprises co-relating the received information with information stored in the central monitoring platform for the dispenser from which the information has been received.

The stored information contains information on the specific characteristics of the container associated with the dispenser and the specific model pump associated to the dispenser, necessary to complete the control and monitor the level of product, as it also configured to contain historic information of product quantity in the dispenser, so that the current remaining quantity of product inside the dispenser is readily calculated by subtracting the quantity of dispensed product from the stored historic quantity of remaining product based in previous transmissions of the pump-actuated dispenser and co-relating that with the container model capacity and volume.

### Brief description of the drawings

Preferred embodiments of the invention, are henceforth described with reference to the accompanying drawings, wherein:
Figure 1.- shows in Figure A a perspective view of a preferred embodiment of a dispenser according to the invention; Figure B shows a front elevational view; Figure C shows a top plan view; and Figure D shows a cross-sectional view taken at plane A-A in Figure C. The internal components of the compression-pump are not represented because they are conventional.
Figure 2.- shows in Figure A another front elevational cross-sectional view of the dispenser with the pump actuator in the resting position and the switch open; Figure B shows the pump actuator in the pressed-down position and the switch closed. Figures C, D, E are schematic representations of several positions of the switch, namely Figure C illustrates a disconnected position of the switch; Figure D illustrates an intermediate connected position (for unmetered pumps), and Figure E illustrates the end press-down connected position.

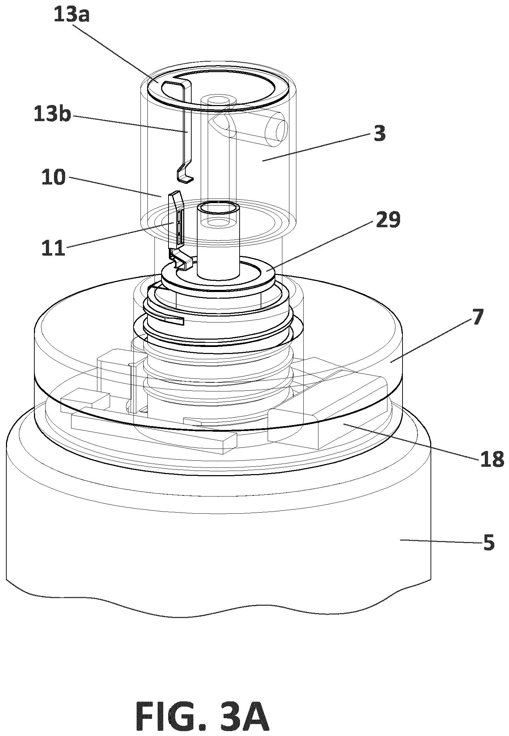

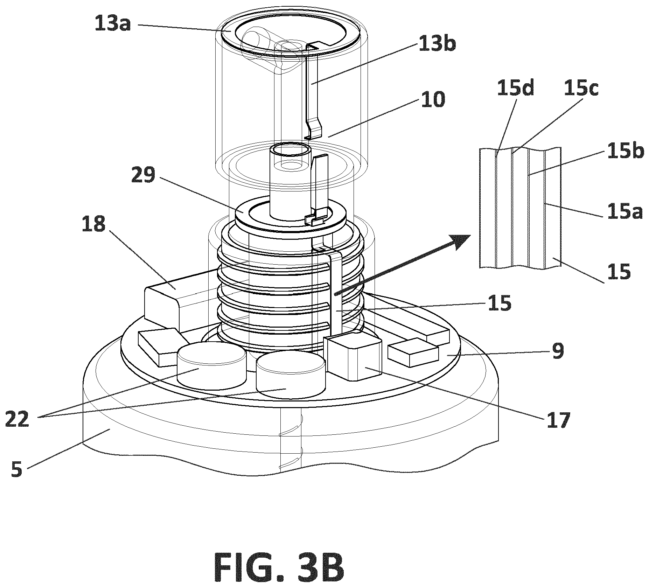

Figure 3.- shows two perspective views of switch in the open position integrated inside the pump actuator (shown as transparent component for the shake of illustration) and fitted to the cap. In Figure B the housing is removed to more clearly show the circuit, and includes an enlarged view of the connection lines.
Figure 4.- shows two different perspective views, wherein in Figure A the housing represented as transparent component for the shake of illustration, including an enlarged view of the multi-line connector between the connection lines and the circuit.
Figure 5.- shows a perspective view in Figure A of another preferred embodiment incorporating solar panels. Figure B is an elevational view of the embodiment of Figure A.
Figure 6.- shows two perspective views of the dispenser from below, wherein Figure B includes an enlarged detail of the free end of the dip tube including an antenna supported by the dip tube.
Figure 7.- shows in Figure A a perspective view of another embodiment of the dispenser incorporating an additional antenna embedded in the housing. Figure B is a perspective view from below, and Figure C is a cross-sectional view of the embodiment of Figure A.
Figure 8.- shows an electric diagram of the electronic circuit integrated with the dispenser, and the system of the invention.
Figure 9.- shows a general flow diagram of the method according to the invention for obtaining accurate product level readings and monitoring.
Figure 10.- shows a flow diagram of the dispenser actuation sensor carried out inside the dispenser, to process level zero data inside the dispenser (firmware).
Figure 11.- shows a flow diagram of the remote determination of product level.
Figure 12.- shows several flow charts corresponding to several processes implemented in the CMP; wherein Figure A is the signal model training process; Figure B is the lost model process; Figure C is the Machine Learning pipeline operation Figure D is the imputation model training; Figure E is another ML pipeline operation; and Figure F is the calibration process.

### Preferred embodiment of the invention

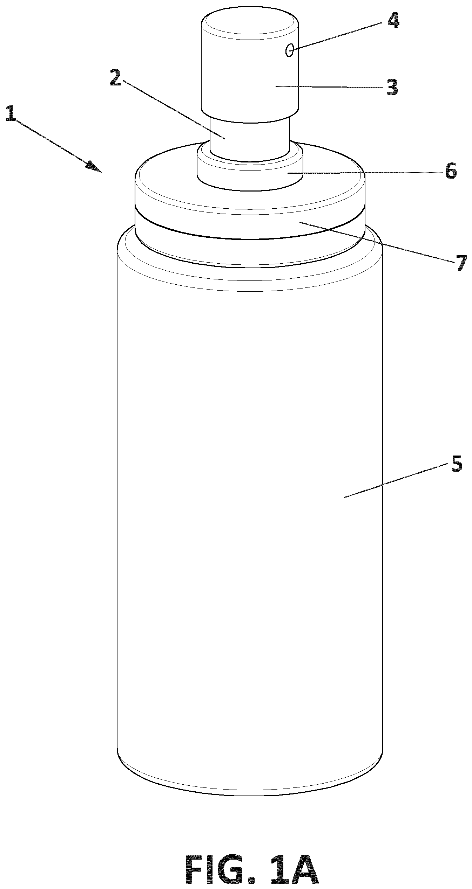

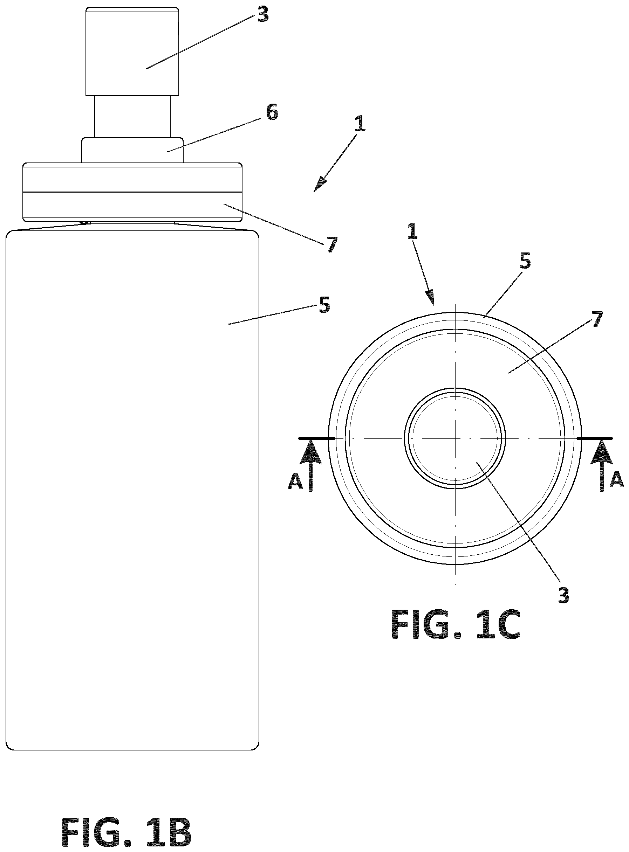

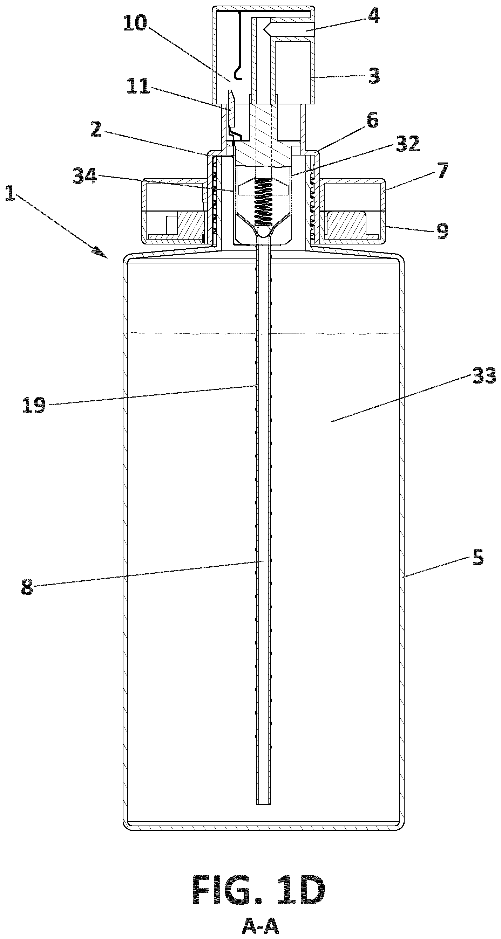

**Figure 1** shows an exemplary embodiment of a pump-actuated dispenser (1) according to the invention, comprising a compression pump (2) and a pump actuator (3) to operate the compression pump (2) in a conventional and known manner, and a cylindrical cap (6) attached to the compression pump (2) and coupled, for example threaded on a container (5) of a product (33) to be dispensed.

The pump actuator (3) has a nozzle (4) for the output of a product to be dispensed, which is suctioned by the compression pump (2) from the container (5) through a dip tube (8) connected with the compression pump (2) and extending through the container (5) interior.

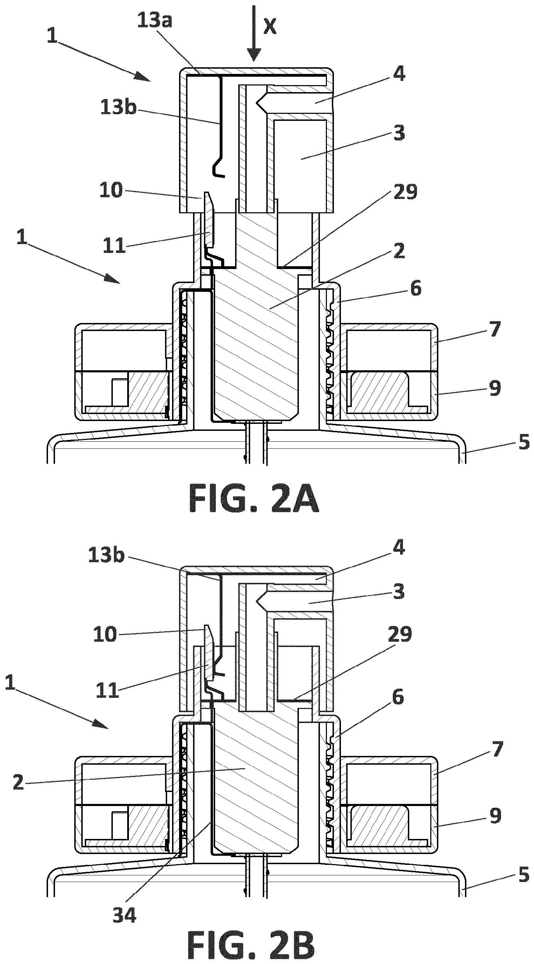

The pump actuator (3) is displaceable between two end positions in a known manner, a resting position **(****Figure 2 A)****,** and a pressed-down position **(****Figure 2 B)****,** such as when the pump actuator (4) reaches the pressed-down position a metered amount of product from the interior of the compression pump (2) has been dispensed through the nozzle (4).

The dispenser (1) integrates a switch (10) placed inside the dispenser and therefore hidden from the exterior. The switch (10) has a substrate (11) made of an electrically isolating material (preferably a PCB), that is internally attached to the cap (6) in a fixed position by means of a ring (29).

The switch (10) has at least one fixed contact (12) formed on a flat surface of the substrate (11), and a movable contact (13) arranged inside the pump actuator (3) and internally attached to the pump actuator (3), such as the movable contact (13) and the actuator (3) are jointly movable. The movable contact (13) is a metallic piece having a ring (13a) joined internally to an upper base of the pump actuator (3), and a metal strip (13b) extending vertically (parallel to the movement axis (X) of the pump actuator) and configured to slide and press on the fixed contact (12) by elastic force.

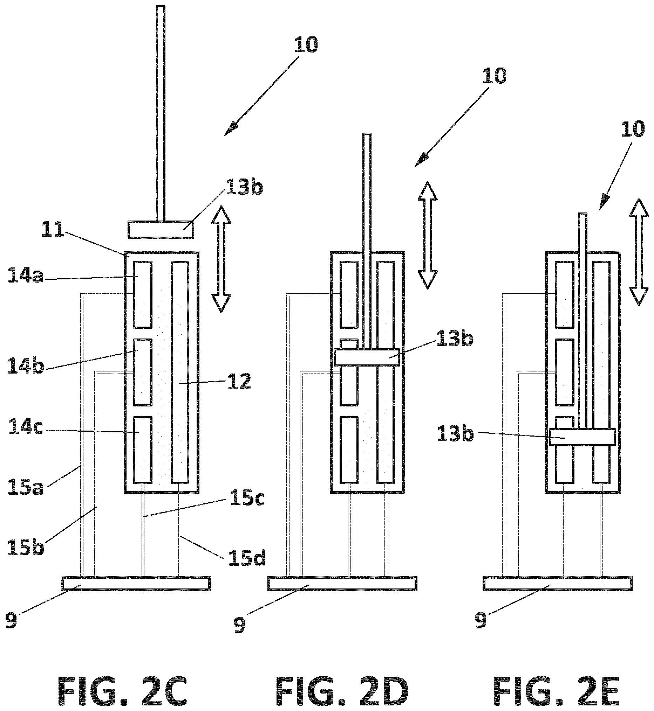

As shown in **Figures 2** **A, B,** a top part of the substrate (11) has the shape of a ramp, and the free end of the metal strip (13b) has the shape of a hook, in such a way that it is ensured that when the metal strip (13b) contact with the substrate (11), the metal strip (13b) would slides on the substrate (11) surface in which the fixed contact (12) is supported.

In the embodiment of **Figures 1** and **2****,** the switch (1) comprises four fixed contacts supported on a flat surface of the substrate (11), and the movable contact (13) slides on the fixed contacts, to connect one of the fixed contacts with one of the other fixed contact.

More in detail and as represented in **Figures 2** **C,D,E,** there is one common fixed contact (12) and three position fixed contacts (14a,14b,14c), all of them vertically arranged in a direction parallel to the displacement direction (X) of the pump actuator. Therefore, each position fixed contact (14a,14b,14c) is indicative of an axial position of the pump actuator (3), that is, each position fixed contact (14a,14b,14c) correspond to a certain degree of actuation of the compression-pump (2), which in turn correspond to a predetermined amount of dispensed product

The movable contact (13), its metal strip (13b) in particular, slides on the common fixed contact (12) and on the position fixed contacts (14a,14b,14c), so as to connect the common fixed contact with one of the fixed contact depending on the axial position of the pump actuator (3).

Therefore, the switch has three poles or lines to trigger signals at three different actuation levels of the pump actuator (3), namely: a low activation level (fixed contact 14a), and intermediate activation level (fixed contact 14b), and press-down position or full activation level (fixed contact 14c). The position fixed contacts (14a,14b,14c) are connected with an electronic circuit (9), that can read which contact has been activated, and generate data in the form of a specific code for each one of the contacts.

The movable contact (13) is displaceable between two end positions of the switch (10), a non-contact position **(****Figures 2A****,** **2C****)** in which the switch (10) is open and the electronic circuit (9) is in a sleep mode, and a fully pressed-down position **(****Figure 2E****)** in which the switch (10) is closed and electrical contact is stablished between the common fixed contact (12) and the lower most fixed contact (14c), thereby closing the switch and turning the electronic circuit (9) in the run mode. Intermediate positions of the pump-actuator (3) are detected when the movable contact (13) connect the common fixed contact (12) with the low activation level fixed contact (14a) or with the intermediate fixed contact (4b), in which cases the electronic circuit (9) is also turned to the run mode.

The dispenser (1) further comprises a housing (7) mounted with the cap (6). As shown in **Figures 1** and **2****,** the housing (7) is configured as a toroid and the cap (6) is press-fitted in the central circular opening of the housing (7). The electronic circuit (9) is fitted inside the housing (7), and it is embodied has a Printed Circuit Board (PCB), preferably a ring-shaped PCB.

The dispenser incorporates connection lines (15a,15b,15c,15d) passing through the housing (7) and connecting each of the fixed contacts (14a,14b,14c) and the common fixed contact (12), with the electronic circuit (9) as shown schematically in **Figure 2** **C,D,E.**

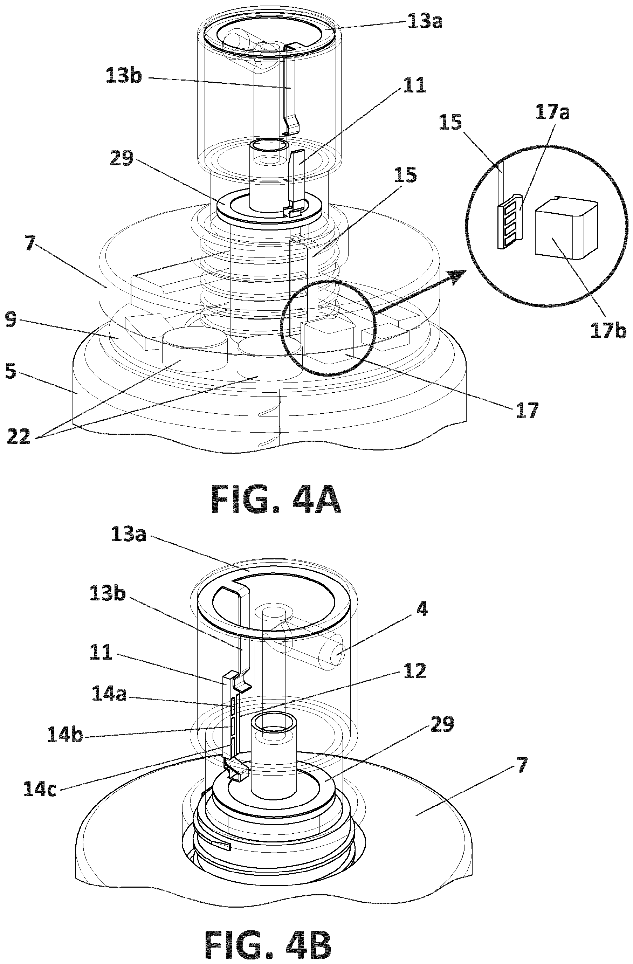

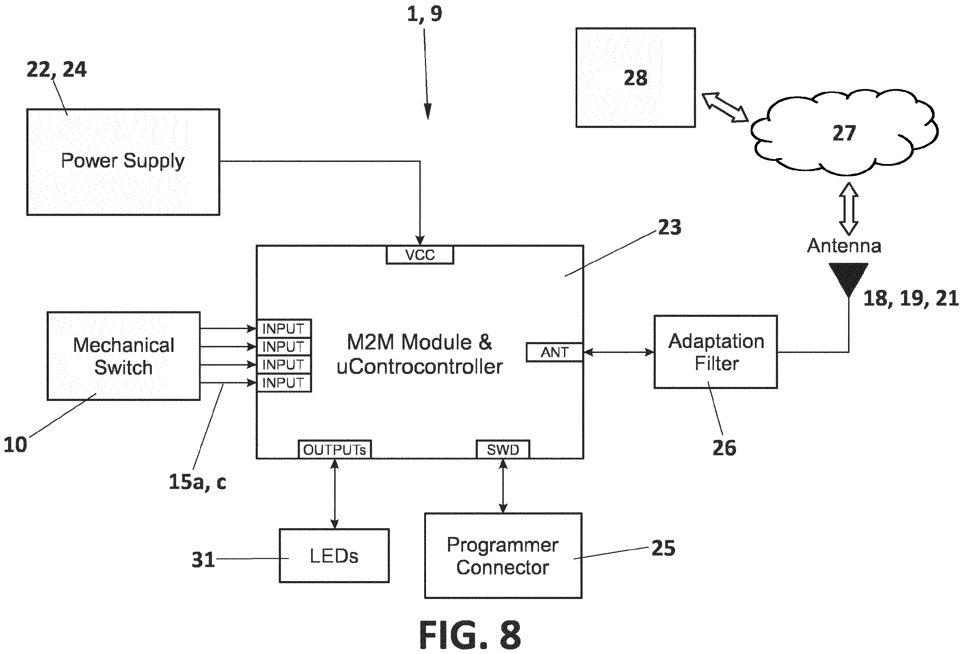

Preferably, the connection lines (15a,15b,15c,15d) are supported on a flexible plastic strip (16). For connecting this strip (16) with the circuit (9), a multiline connector (17) as the one shown in **Figure 4A** is used. This connector (17) has two connectable parts, a male part (17a) and a female part (17b) each parts having electric terminals face to face with corresponding terminal of the other parts, so that when the two parts (17a,17b) are engaged, the respective terminals are brought into electric contact. The terminals of the males part (17a) are connected with the connection lines (15a,15b,15c,15d), and the terminals of the female part (17b) are connected with the electronic circuit (9) such as the connection between the contacts of the switch (10) and the circuit as shown in **Figure 8** is stablished.

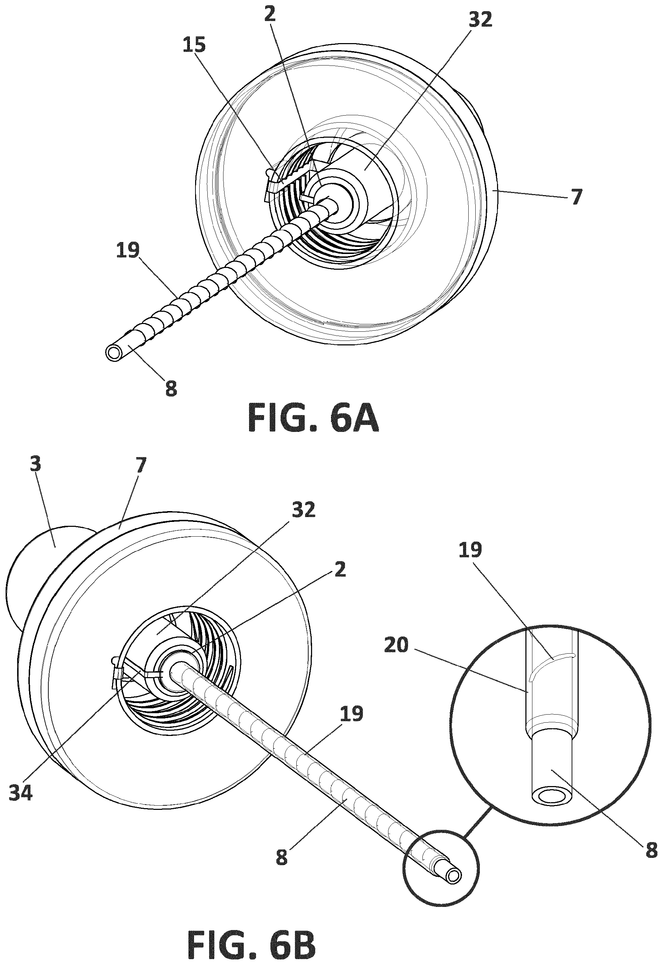

The antenna is a chip antenna (18), that is an antenna formed inside an integrated circuit, that it is mounted on the circuit (9). Alternatively, or in addition to the chip antenna (18), an additional antenna (19) is supported by the dip tube (8) and extend lengthwise in the tube and it is rolled around the dip tube forming a helix, as more clearly shown in **Figure 6****.** This additional antenna (19) is electrically isolated from a product inside the container (5), by means of an isolating material, preferably by means of a silicone tube cover (20) and can operate as the main antenna or a signal booster complementary one.

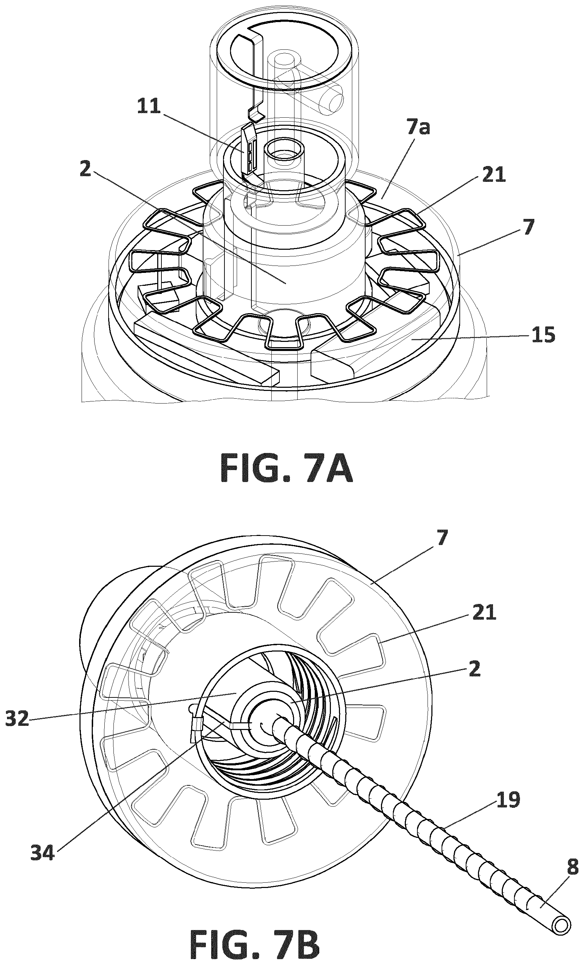

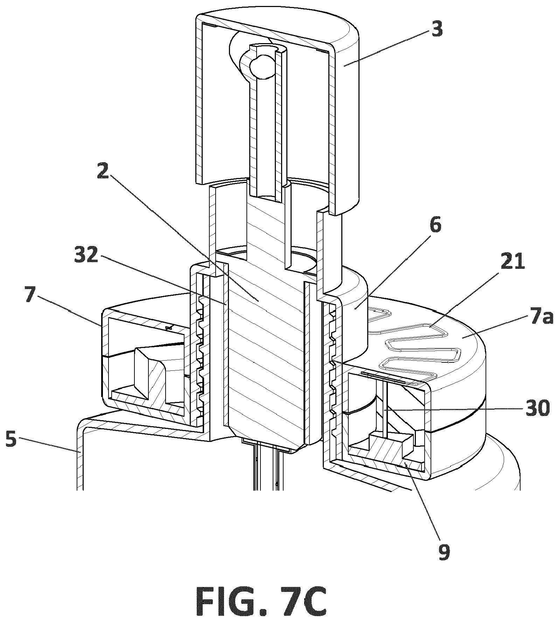

The helix antenna (19) is a monopole operating at Lambda/4, and the dispenser (1) includes a ground plane connected with the ground of the electronic circuit. The ground plane is embodied in this case as a metallic tube (32) fitted externally to the pump (2) as shown in **Figures 6B****,****7B****,****7C** and is also covered by isolating material. A connection line (34) connects the antenna (19) with the electronic circuit (32) passing through the housing (7).

In the embodiment of **Figures 7** **A, B,** instead of the chip antenna (18), the dispenser (1) incorporates a strip antenna (21) which is a strip supported or directly 3D-printed by layers on an external surface of the housing (7) or embedded within the top surface (7a) of the housing (7). Preferably, the antenna (21) has a meander configuration and extends around the compression-pump (2). A connection line (30) connects the antenna (21) with the circuit (9).

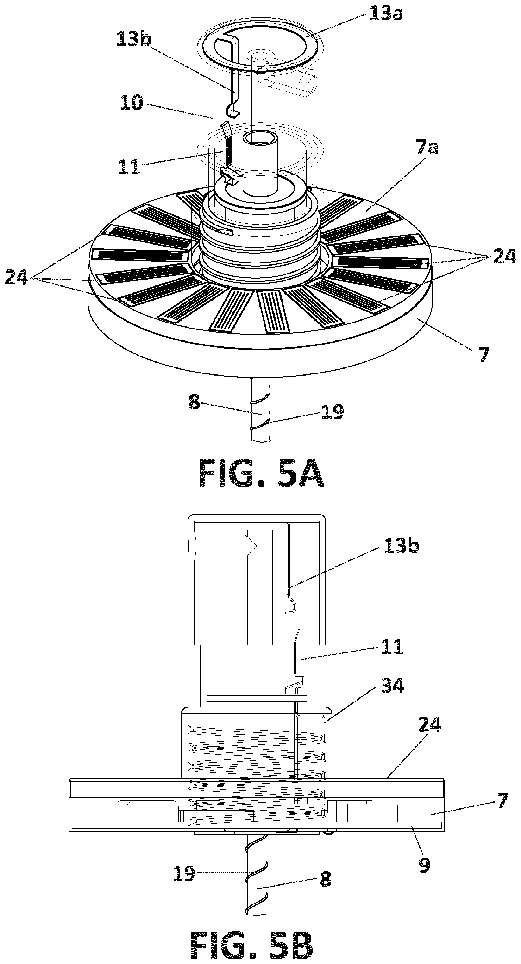

Preferably, the power source comprises two customized button batteries (22) placed inside the housing (7) and connected to the circuit (9). Alternatively, or in addition to the batteries (22) the dispenser incorporates a set of solar cells (24) mounted on a top external surface (7a) of the housing (7) and connected to the circuit (9) as shown in **Figures 5** **A, B.**

The electronic circuit (9) is preferably implemented as an integrated circuit (23), that integrates the processor, the communication module and the memory. As shown in **Figure 8****,** the switch (10) is connected with the integrated circuit (23) by means of the four lines (15a,15b,15c,15d), that are connected to respective inputs of the integrated circuit (23). The power source, that is, the batteries and/or the solar cells (21,24) are connected to a power input of the integrated circuit (23).

The circuit (9) has one or more Led's (31) connected with an output of the integrated circuit (23) to provide specific light driven messages to the user. A connector (25) is connected with another a communication port of the integrated circuit (23), for its communication with an external device (not shown) for programming the integrated circuit (23).

The antenna or antennas (18,19,21) are connected with the integrated circuit (23) (with the communication module thereof) through an adaptation filter (26) to select a desired transmission frequency to improve the RF input/output power. The communication module and the antenna are configured to communicate via a cellular communication network (27) with a remote central monitoring platform (28).

While the switch (10) is des-activated, for example position of the switch in **Figure 2** **A,** the integrated circuit (23) is in a sleep mode and there is no power (or minimal) consumption. When the pump actuator (3) is pushed by an user, the metal strip (13b) connects the common fixed contact (12) sequentially with the position fixed contacts (14a,14b,14c), thus, the respective inputs of the integrated circuit (23) are closed or interconnected, and the integrated circuit (23) turns to the run mode. In the run mode, the integrated circuit (23) is powered, and a pump activation counting session is initiated, in which a counter of for example 5 seconds is started and if no further activations of the pump are carried out, the session is concluded and a signal containing the session code and the identification code is transmitted.

If within the 5 seconds count, more pump activations are detected, the number of activations are counted and the timer is reset, so after 5 seconds without further pump activations, the session is concluded and signal is containing the session code and a signal containing the dispenser (1) unique identification code and a session activation code is transmitted by the antenna or antennas (18,19,21). When the pump actuator (3) is released from the pressed-down position, the switch (10) is des-activated, and the circuit (8) after sending the signal, returns to the sleep mode in which no power is consumed.

The term activation is to be understood as the end push-down position or any intermediate pump activation position, that are detected depending of which line of the switch is activated, that is, which input of the integrated circuit (23) is activated. The activation code identifies which fixed contact is activated, that is, the pressed-down position (contact 14c) and/or the predefined intermediate positions (14a,14b) that measure the depth of the push based in the mechanical integration piece data.

The processing unit is manufactured with a unique identifier number, and this number is used as the dispenser unique identification code. The processing unit converts the code in binary digital data representing each actuation (level zero data), and the processor is programed to take and process this level zero data, execute specific routines to virtually represent usage sessions of the product, encrypts that information and then send this Level 1 pre-processed data to the communications unit of the product that in turns send it to a central processing platform through a long range cellular radio network. The energy consumption to perform this simple calculation is very reduced compared with prior art systems that require to energize and measure sensors with high peak energy rate consumptions.

A system according to the invention for remote monitoring of product consumption is also represented in **Figure 8****.** The system comprises at least one pump-actuated dispenser (1) as the one defined above including any of the described alternatives, and a remote central monitoring platform (28) communicated through a communication network (27) with the plurality of pump-actuated dispensers (1). The central monitoring platform (28) is adapted to receive and process signals containing the dispenser unique identification code and a pump activation session code (containing the number of pump activations or intermediate activations), transmitted by each of the pump-actuated dispensers, preferably the central monitoring platform is adapted to calculate for each specific dispenser (1) remaining product quantity, such as product consumption is derived by counting the number of full or partial activations of the compression pump, co-relating with the specific pump-model part number stored in the platform, the type of product, and the specific container capacity attached to the unique ID.

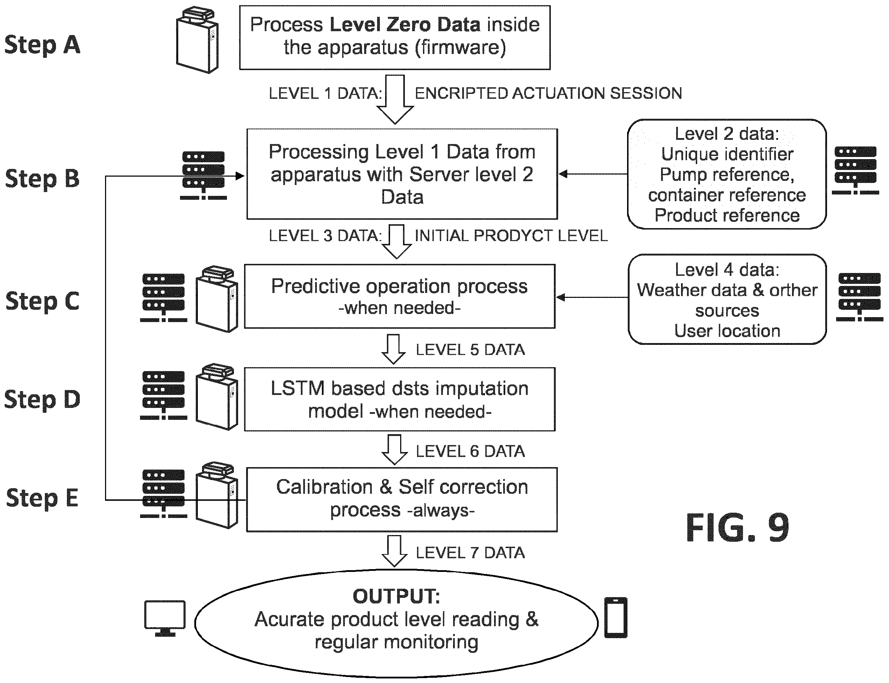

**Figure 9** illustrates the method according to the invention. The process is as follows:

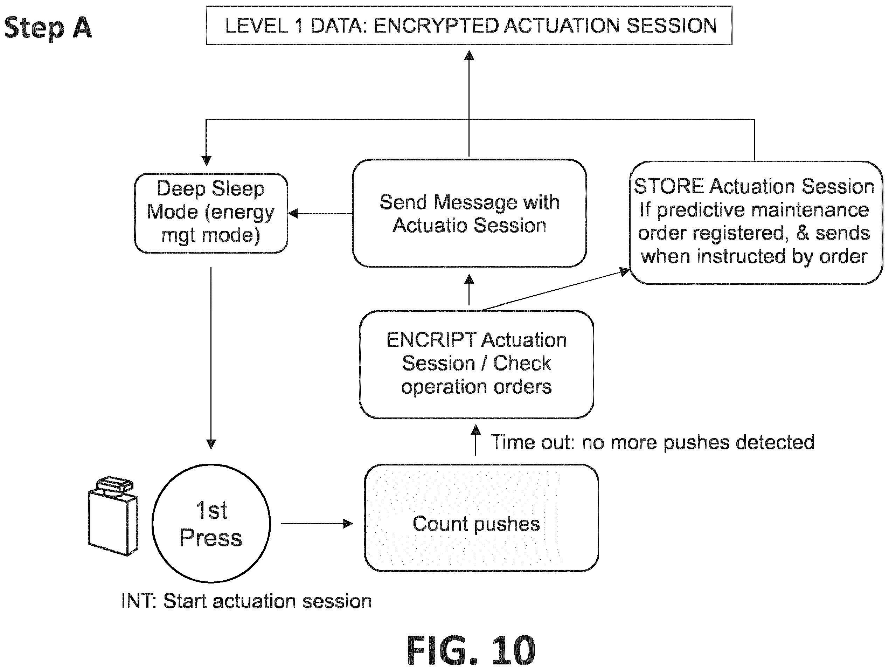

### STEP A: Data of the pump activation code and data of the actuation session. Process to generate Level One Data inside the dispenser. Figure 10.

As shown in **Figure 10****,** when the compression pump is pressed down by a user (Level Zero Data inside the dispenser) to dispense an amount of product, the electronic circuit turns from the sleep mode to the run mode, and the pump activation counting session is initiated as explained above to count one or more activations (pushes). This activations in full activations and intermediate activations, depending on which input of the electronic circuit is activated by a line of the switch. After a certain time has elapsed without further activations, the counting session is concluded and a pump activation session code is created including the number of counted activations and the type thereof, and this code together with the dispenser unique identification code are encrypted and prepared for its transmission.

Before sending the signal, the circuit check whether any operation order has been received from the central monitoring platform, for example a predictive operations order. In case such an order has been received, the actuation session code is temporarily stored, and a operations order or any other process is executed, and when concluded, the signal is transmitted as Level One Data (encrypted actuation session) and the circuit returns to the sleep mode to save energy.

Immediately after a first press is noticed, a pump activation code is produced, and once the system has confirmation of no further pushes, an actuation session information is generated (Level zero data), including a time & date stamp, the total number of pushes data, a sequential number for each push/press, and the unique ID number of the remote monitoring dispenser.

The actuation session is further encrypted to increase security of the data to be transmitted, and the encrypted actuation session is transmitted to the Central Monitoring Platform (CMP), unless there is a previous predictive operation order received by the processor, in which case the actuation session is stored in the memory for a later use.

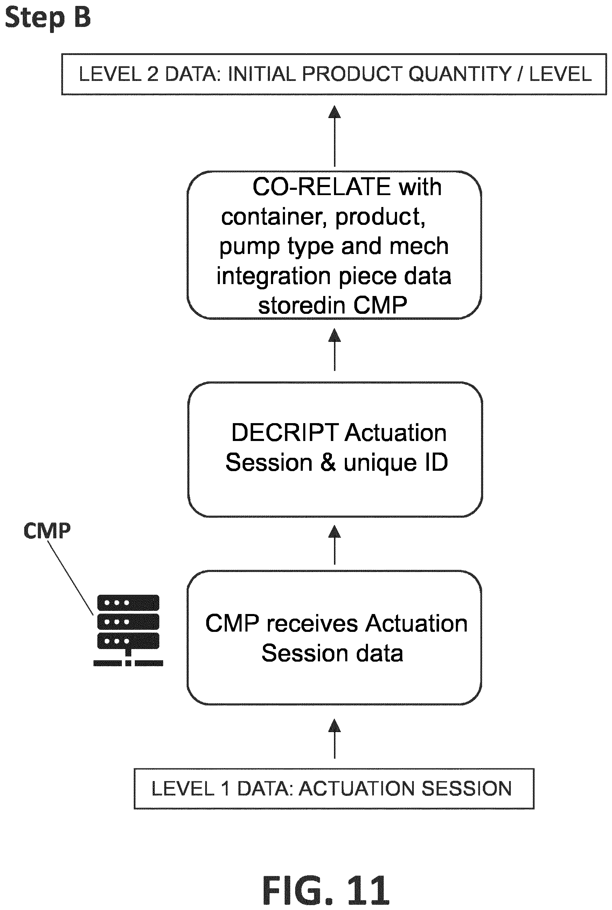

### STEP B: Remote production of initial product quantity / level in the external central monitoring platform. Process to generate Level Two Data at the Central Monitoring Platform (CMP). Figure 11

As represented in **Figure 11** the Central Monitoring Platform (CMP) receives and process the Level One Data from each dispenser, decrypt the received signal and link it / co-relate it to specific data related to a client unique id, encryption tables, container type and capacity, metered / unmetered pump model, and it is capable of producing accurate microliters measure of the product dispensed and level / quantity of product remaining in the container to generate Level Two Data related to product quantity / level.

It has have found that occasionally, under some low coverage situations due to weather conditions or others in some areas, the cellular networks used are not able to reliably transmiting Level 1 data to the Central Monitoring Platform (CMP). To prevent this, machine learning techniques are used for training the system to predict when a Level 1 data is not going to be properly transmitted through the cellular network, and the (CMP) instructs exceptionally the pump-actuated processor not to send the signal in real time, but store it in memory and transmit it at later time, only when the predicted/real weather conditions are stable and right again for the transmission. In this way, the quality of the product level / quantity determination is ensured and continuous and qualitative monitoring is achieved.

In the eventual and much less likely case that an actuation is still lost and does not arrive to the (CMP), as every actuation is assigned a unique digital counter number with a certified date & time, the system is able to understand when that actuation was lost and re-fill it in the right most predictable position to have a reliable time series of events and ensure the accurate product level/quantity measure over time, and battery status constant monitoring.

Once the actuation session information is received by the central monitoring platform, it first proceed to decrypt it, and then integrates and co-relates that data with other stored in it comprising the exact pump model reference, and the container reference that is physically attached to it, and the product reference, producing an accurate measure of the actual product quantity / level in microliters, milliliters, or grams, still stored in the container that can be accessed through any mobile device (PC, Tablet, Smartphone or equivalent) or other Central Processing platforms. By knowing the part number of a specific dispenser being monitored, the type of container and its capacity can be readily determined, for example: 50 ml, 65 ml, 100 ml, 500 ml, 1 liter etc.

In case the pump is not metered, the dosage of each push contained in an actuation session is specifically measured based in the data from the mechanical integration of the switch by knowing which of its terminals have been activated, to be sent as part of the actuation session package.

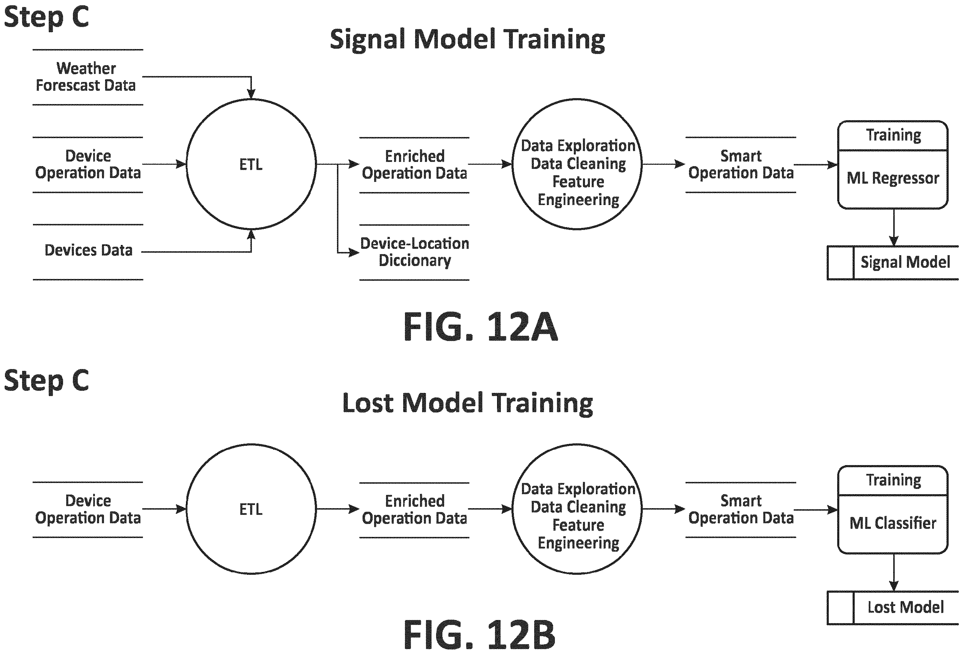

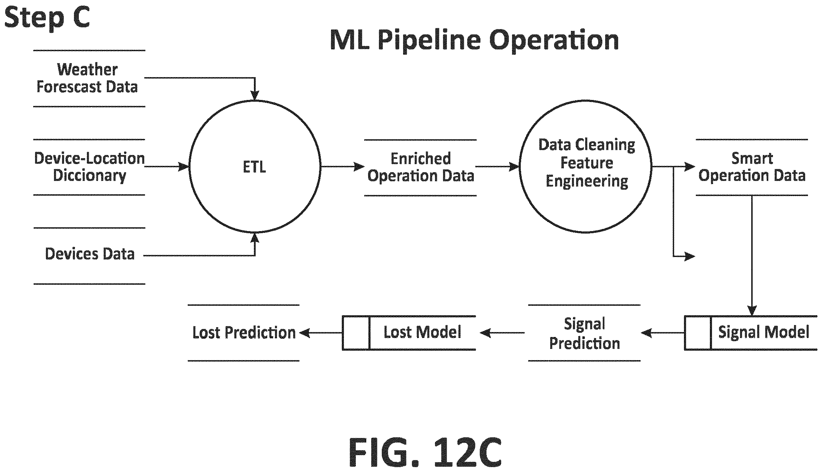

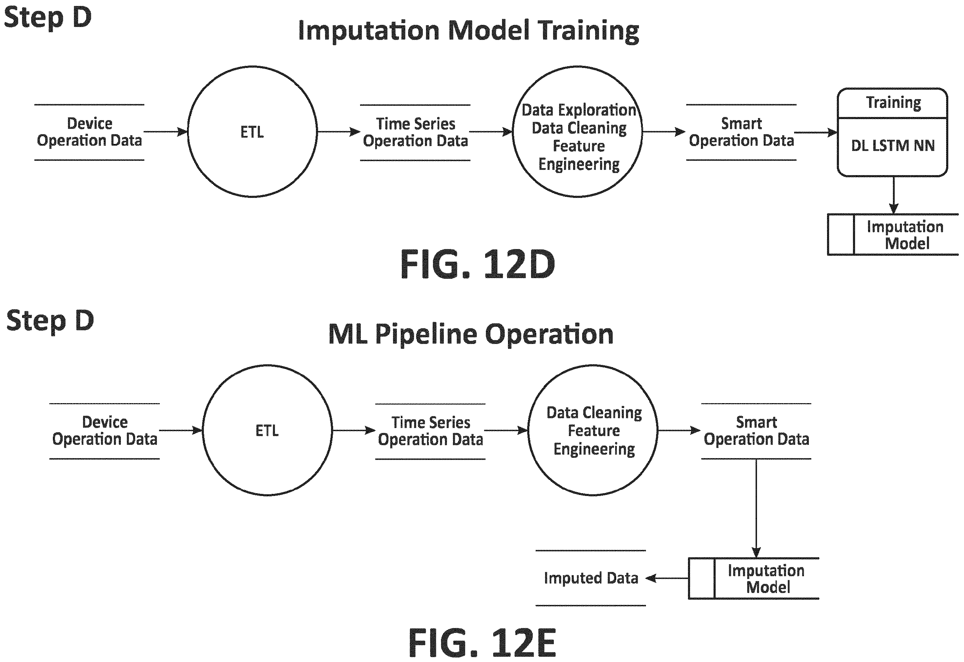

### STEP C - Predictive operation process. Figure 12A

The purpose of this process is to determine if near-future local weather conditions would affect radio communications between dispensing devices and stations - resulting in messages being lost - and if so, set any involved devices to store the information collected within this timeframe until the expected end of the condition. Based in the lab tests and experience, it is important to anticipate whether conditions impact in the Low Power Wide Area Networks technology quality of radio signal. This is especially important in un-regulated radio spectrums like Lora / Sigfox / Ingenu and the likes, but also in Narrow Band IOT, LTE.....

To achieve a relevant prediction between a particular weather forecast and an expected lost/not lost communication, Machine Learning techniques are used at the level of the Central Monitoring Platform. Location of each dispensing device is known with accuracy, latitude and longitude based.
- On development, two machine learning models will be trained from historic data from both past weather forecasts and the quality of the received signal of the dispensing device operation messages sent - including those never received.
- On operation, new weather forecast data will be continually introduced in the pretrained machine learning pipeline, resulting in a prediction of lost/not lost being produced for a given geographic area. This prediction will then be used accordingly to take action on any devices operating within that area, sending a predictive maintenance order to the remote monitored dispenser when needed.

The first Machine Learning model to be trained is a multivariate-regressor that is able to predict signal condition from weather forecast data per location, day of the week and hour of the day.

To achieve this, the training data will combine weather forecast data (like temperature, humidity, cloudiness, ...), device operation data (like longitude/latitude) and device characteristics (like Antenna Type) after a data-engineer process of data transformation & integration of the different data sources, and a data-scientist driven process of data cleaning & feature engineering.

The labels to be learned will represent the strength of the signal and will come from device operation data (SNR, RSSI, ...)

The second Machine Learning model to be trained is a binary classifier that is able to predict a lost/not lost condition from a given signal condition.

For this model, training data will only require device operation data related to the strength of the signal (SNR, RSSI, ...) after a data-engineer process of data transformation and a data-scientist driven process of data cleaning & feature engineering.

The labels to be learned will be whether the message was lost or not and will come from device operation data that includes lost messages data from the devices themselves.

Also, the models themselves will be built testing several Machine Learning and Deep Learning algorithms like Logistic/Linear Regression, Random Forests, Neural Networks, ... all of them of a supervised nature.

Prediction of a lost/not lost condition from a given weather forecast will happen per location and date imputing the weather forecast data to the first trained model and its outputs to the second trained model to achieve a lost/not lost prediction for this location and date (hourly).

After repeating the process for all the locations of interest and for the different hours of the day, for a whole week, the complete table of locations-days & hours will be filled with lost/not lost predictions.

This information will then be used based in the lost prediction to inform any devices belonging to any location with a Predictive operations/maintenance order, including the expected beginning and end of the condition so they store messages within this timeframe.

Once the timeframe is over, devices will resume normal operation unless an updated forecast extending the condition is received.

### STEP D - Data imputation process to earn accuracy. Figure 12D

For the unlikely event that after the predictive operation/maintenance process, any actuation session or a part of it is lost, an additional data imputation process is designed in the Central Monitoring Platform.

The purpose of this data imputation process is to fill any missing gaps existing in the received operation data formed by the actuation sessions content that due to communication conditions are resulting in loss of data.

Conventional approaches for imputing missing data, leverage algorithms like ARMA or ARIMA which assume a linear behaviour of the time series. Machine learning models using this algorithms are simple to implement and quick to run, but cannot capture a sudden wave in the periods of missing values/pushes as they assume the data is smooth and the pattern well defined.

To achieve a good imputation of missing data when it exhibits no stationary behaviour - there is not a clear pattern - or includes sudden level shifts - there are micro patterns - Deep Learning techniques for time series analysis will be used.

Using state-of-the-art Deep Learning techniques like LSTM (long-short term memory) neural networks, removes any assumptions on the data (stationary, no level shifts) and allows us to capture non-linear trends that would otherwise be missed. This will probe to be a key factor on achieving and accurate imputation given our expected data.
- On development, a Long Short Term Memory (LSTM) neural network is built to model the time series pattern of usage per device attending to the day of the week, hour of the day and if it is a bank holiday or not - for received data.
- On operation, when a missing value is detected (actuation sessions and continuous sequence on origin of presses, eases detection on skipped) the number of missing values and the time-window for them to have happened will be imputed into the trained neural network which will them output the most probable time for them to have occur. This way, the model replicates the most likely behaviour of the remotely monitored container user and also is able to compute and deliver a very accurate final control measure of the product level/quantity as a final step of the process.

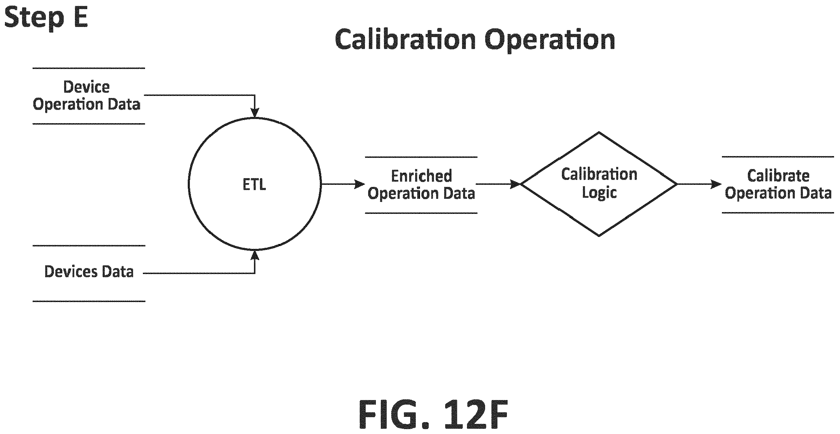

### STEP E: Calibration process. Figure 12F.

In most cases, the quality or properties of the product stored in the container will be affected by the environmental conditions of the location of dispenser storage. In case of water, alcohol, or essential components evaporating over time due to the storing conditions, this can affect the viscosity of the product and its properties, as well as its fragrance concentration and product / liquid level which is another factor affecting the remote monitoring of product consumption if an accurate measure wants to be constantly produced. It is known in the affected industries, that even with crimped pumps and moisture / humidity isolated pumps, there can be a given level of product properties degradation and loss over time.

It is for this reason that there is also a dispensing device calibration process that is able to co-relate the readings of the ambient & temperature conditions where the device is located obtained by the sensors attached to the device (i.e. humidity and temperature) with the evaporation and loss of properties of the specific "in-container" product data properties that are stored in the central monitoring platform.

The output of this Step can be used also for preventing inappropriate use of the product by the user/patient, but the relevance for this invention strives in its assistance to provide an even more accurate remote monitoring of product level/quantity, so when the conditions are met, the system over-writes the actual measures obtained in the previous steps considering the impact of this factors.
- The calibration process combines device operation data (like temperature or humidity) with device data (like container type) and applies a well-defined calibration correction to obtain the calibrated values more precisely matching the real measure of the device operation data.

The Steps and processes under A to E are iterated over time in connection to the Central Monitoring Platform, so an actual constant remote monitoring and control of the product quantity / level with accuracy it is possible.

## Claims

1. A pump-actuated dispenser (1) comprising:
a compression pump (2) and a pump actuator (3) to operate the compression pump (2), the pump actuator (3) having a nozzle (4) for the output of a product to be dispensed,
wherein the pump actuator (3) is displaceable between two end positions, a resting position and a pressed-down position, such as when the pump actuator (3) reaches the pressed-down position a metered dose of product is dispensed through the nozzle (4),
a cap (6) attached to the compression pump (2) and configured for coupling the compression pump (2) with a container (5) of the product to be dispensed, an electronic circuit (9), a power source (21,24) connected or connectable with the electronic circuit (9), and at least one switch device (10) to activate the electronic circuit (9), wherein the switch device (10) is arranged inside the pump-actuated dispenser (1),
wherein the electronic circuit (9) has stored an unique identification code usable to identify the pump-actuated dispenser (1),
a communication port connected with the electronic circuit (9)
wherein the switch device (10) is operable by the pump actuator (3), in such a way that when the pump actuator (3) reaches its pressed-down position and/or a predefined intermediate position between the two end positions, the switch device (10) is activated, and when the pump actuator (3) is in its resting position, the switch device (10) is des-activated, and
and wherein the electronic circuit (9) is programmed for counting within a predefined time lapse the number of switch device (10) activations that correspond to a pump activations and/or intermediate pump activations, and to make accessible or readable at the communication port, the data containing the dispenser unique identification code and a pump session activation code containing information relative to the number of pump activations and/or intermediate pump activations.

2. A pump dispenser according to claim 1, wherein the communication port includes at least one antenna (18,19,21) communicated with a communication module of the electronic circuit (9), and wherein the electronic circuit (9) is adapted so that when it is activated by the switch device (10), a signal containing the dispenser unique identification code and a pump session activation code can be transmitted by at least one of the antennas (18,19,21).

3. A pump-actuated dispenser according to claim 2, wherein the electronic circuit (1) comprises operatively intercommunicated: a processing device, a communication module, and a memory storing the unique identification code, and wherein the electronic circuit (9) is configured to transmit a RF signal containing the dispenser unique identification code and a pump session activation code containing information relative to the number of pump activations and/or intermediate pump activations.

4. A pump-actuated dispenser according to any of the preceding claims, wherein the switch device (10) comprises at least one fixed contact (12) attached internally to the cap (6) and one movable contact (13b), preferably a metal strip, internally attached to the pump actuator (3) and configured to slide and press on the fixed contact so that the movable contact (13b) and the pump actuator (3) are jointly movable, and wherein the movable contact (13b) is displaceable between two end positions of the switch device (10), a non-contact position in which the switch device (10) is open and a closed position in which the switch device (10) is closed and electrical contact is stablished between the movable contact (13b) and the fixed contact (12).

5. A pump-actuated dispenser according to any of the claims 2 to 4, wherein the switch device (10) comprises a substrate (11) made of an electrically isolating material and internally attached to the cap (6), and wherein the switch device (10) further comprises at least two fixed contacts (12,14a,14b,14c) supported on a flat surface of the substrate (11), and wherein the movable contact (13b) is configured to slide on the fixed contacts and to connect two of the fixed contact in the closed position of the switch device (10).

6. A pump-actuated dispenser according to claim 5, wherein the switch device (10) comprises one common fixed contact (12) and two or more position fixed contacts (14a,14b,14c) vertically arranged in a direction parallel to the displacement axis (X) of the pump actuator (3), and wherein the movable contact (13b) is configured to slide on the common fixed contact and on the position fixed contacts, so as to connect the common fixed (12) contact with one of the position fixed contact (14a,14b,14c) depending on the axial position of the pump actuator (3).

7. A pump-actuated dispenser according to any of the claims 2 to 6, further comprising a housing (7) mounted with the cap (6), and wherein the electronic circuit (9) is enclosed inside the housing (7), and wherein the dispenser further comprises connection lines (15a,15b,15c,15d) passing through the housing (7) and connecting each of the position fixed contacts (14a,14b,14c) and the common fixed contact (12) with the electronic circuit (9).

8. A pump-actuated dispenser according to claim 7, wherein the housing (7) has a central opening and wherein the cap (6) is fitted inside the opening, such as the housing (7) extends around the cap (6), preferably the housing has a ring-shaped configuration.

9. A pump-actuated dispenser according to any of the preceding claims, wherein the power source includes at least one battery (22) enclosed inside the housing (7), and/or at least one solar cell (24) mounted on an external surface (7a) of the housing (7).

10. A pump-actuated dispenser according to any of the claims 2 to 9, further comprising a dip tube (8) coupled with the compression pump (2), and wherein the antenna or antennas is at least one of the followings (i - iii): (i) an antenna supported by the dip tube and a ground plane for the antenna supported by the pump upper cover part (8) and extending lengthwise in the dip tube (8) and optionally covered by an electrically isolating material, (ii) a conductive strip antenna supported on an external surface of the housing (7), and/or (iii) a chip antenna mounted on the circuit printed board.

11. A pump-actuated dispenser according to any of the preceding claims, further comprising a container (5) coupled with the pump-actuated dispenser, wherein the container contains the product, and wherein the product is in the form of a liquid, foam, cream or gel, including a perfume and/or a cosmetic and/or a pharmacologic composition.

12. A pump-actuated dispenser according to any of the preceding claims, wherein the communication module and the antenna are configured to communicate with a cellular communication network, and/or configured to communicate via a short-range communication protocol.

13. System for remote monitoring of product consumption comprising at least one pump-actuated dispenser (1) as the one defined in any of the preceding claims, and a central monitoring platform (CMP) communicated through a communication network with the at least one of the pump-actuated dispenser (1), wherein the central monitoring platform (CMP) is adapted to receive and process signals containing the dispenser unique identification code and a pump activation session code transmitted by a pump-actuated dispenser (1), preferably the central monitoring platform (CMP) is configured to calculate for each specific pump-actuated dispenser (1) remaining product quantity, such as product consumption is determined based on the number of counted full or partial activations of the compression pump and the other container specific data specified before.

14. Method for remote monitoring of product consumption using the pump-actuated dispenser defined in any of the claims 1 to 12, and/or the system of claim 13 comprising the steps of:
counting in the pump-actuated dispenser (1), the number of full pump activations and/or intermediate pump activations within a predefined time lapse, wherein each pump activation corresponds to a known amount of dispensed product,
generating a signal containing a dispenser unique identification code, and a pump actuation session containing information about the counted full pump activations and/or intermediate pump activations within said predefined time lapse, and transmitting said signal to a central monitoring platform (CMP).

15. Method according to claim 14 further comprising the step of receiving and processing in the central monitoring platform (CMP) the signal transmitted by the pump-actuated dispenser,
wherein the step of processing comprises co-relating the received information with information stored in the central monitoring platform for the dispenser from which the information has been received, wherein the stored information contains historic information of product quantity in the dispenser, and the specific data of the dispenser capacity and pump model
calculating in the central monitoring platform (CMP) the remaining quantity of product inside the dispenser.
